(19) Europäisches Patentamt
European Patent Office
Office européen des brevets

(11) EP 1 140 716 B1

(12) # FASCICULE DE BREVET EUROPEEN

(45) Date de publication et mention de la délivrance du brevet: **05.11.2003 Bulletin 2003/45**

(21) Numéro de dépôt: **99958274.5**

(22) Date de dépôt: **08.12.1999**

(51) Int Cl.[7]: **C03C 1/00**, C03C 17/25, C01B 33/16

(86) Numéro de dépôt international: **PCT/FR99/03058**

(87) Numéro de publication internationale: **WO 00/035818 (22.06.2000 Gazette 2000/25)**

(54) **PROCEDE DE PREPARATION D'UN SOL ORGANOSILICIE ET MATERIAUX OBTENUS A PARTIR D'UN TEL SOL**

VERFAHREN ZUR HERSTELLUNG EINES ORGANOSILICIUM-SOLS UND DARAUS ERHALTENE MATERIALIEN

METHOD FOR PREPARING AN ORGANOSILICON SOL AND MATERIALS OBTAINED FROM SAME

(84) Etats contractants désignés:
**AT BE CH CY DE DK ES FI FR GB GR IE IT LI LU MC NL PT SE**

(30) Priorité: **15.12.1998 FR 9815825**

(43) Date de publication de la demande:
**10.10.2001 Bulletin 2001/41**

(73) Titulaire: **ESSILOR INTERNATIONAL COMPAGNIE GENERALE D'OPTIQUE
94227 Charenton cédex (FR)**

(72) Inventeurs:
- **BITEAU, John
F-74014 Paris (FR)**
- **BOILOT, Jean-Pierre
F-92360 Meudon la Forêt (FR)**
- **CHAPUT, Frédéric
F-91300 Massy (FR)**

(74) Mandataire: **Catherine, Alain
Cabinet Harlé & Phélip
7, rue de Madrid
75008 Paris (FR)**

(56) Documents cités:
**EP-A- 0 089 279**
**EP-A- 0 614 957**
**WO-A-94/25406**
**FR-A- 2 493 301**

- **XUE GI ET AL: "Chemical reactions of an epoxy-functional silane in aqueous solutions" RUBBER CHEM TECHNOL;RUBBER CHEMISTRY AND TECHNOLOGY MAY-JUN 1991, vol. 64, no. 2, mai 1991 (1991-05), pages 162-171, XP002115045**
- **DATABASE WPI Section Ch, Week 9351 Derwent Publications Ltd., London, GB; Class A26, AN 93-408881 XP002115047 & JP 05 306339 A (TSP YG), 19 novembre 1993 (1993-11-19)**
- **DARRACQ BRUNO ET AL.: "Novel photorefractive sol-gel materials" OPTICAL MATERIALS, vol. 9, no. 1-4, 1 janvier 1998 (1998-01-01), page 265-270 XP004123037 ISSN: 0925-3467**
- **VAINRUB A ET AL: "Sol-gel polymerization in alkoxysilanes: /sup 29/Si NMR study and simulation of chemical kinetics" SYMPOSIUM G: ATOMIC SCALE CHARACTERIZATION AND SIMULATION OF MATERIALS AND PROCESSES. E-MRS SPRING MEETING, STRASBOURG, FRANCE, 22-26 MAY 1995, vol. B37, no. 1-3, pages 197-200, XP002115106 Materials Science & Engineering B (Solid-State Materials for Advanced Technology), Feb. 1996, Elsevier, Switzerland ISSN: 0921-5107**
- **DATABASE WPI Section Ch, Week 9213 Derwent Publications Ltd., London, GB; Class A26, AN 92-101544 XP002115130 & JP 04 044838 A (TORAY IND INC), 14 février 1992 (1992-02-14)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 1 140 716 B1

- **DATABASE WPI Section Ch, Week 9108 Derwent Publications Ltd., London, GB; Class A82, AN 91-055072 XP002115131 & JP 03 006276 A (SEIKO EPSON CORP), 11 janvier 1991 (1991-01-11)**
- **DATABASE WPI Section Ch, Week 9330 Derwent Publications Ltd., London, GB; Class A13, AN 93-240173 XP002115132 & JP 05 163463 A (DAINIPPON TORYO KK), 29 juin 1993 (1993-06-29)**

## Description

La présente invention concerne d'une manière générale un procédé de préparation d'un hydrolysat d'organoalcoxysilanes, en particulier d'un hydrolysat dans lequel les molécules organiques hydrophobes et peu polaires présentent une excellente solubilité, ainsi que l'utilisation de cet hydrolysat d'organoalcoxysilanes pour l'obtention de substrats ou de films transparents, incluant ou non des molécules organiques et/ou des particules inorganiques, et les applications de ces substrats et films dans le domaine de l'optique, en particulier l'optique ophtalmique.

Dans la suite de la présente demande, l'hydrolysat d'organo-alcoxysilanes sera appelé "sol organosilicié".

D'une manière générale, la préparation de sols organosiliciés est difficile.

Les propriétés finales du sol et par conséquent des substrats et/ou films transparents qui en dérivent dépendent en grande partie du procédé de préparation du sol, même si l'étape finale de séchage/condensation du sol pour l'obtention du substrat et/ou du film joue également un rôle non négligeable.

De tels sols doivent présenter des propriétés de stabilité, c'est-à-dire qu'après sa préparation, les caractéristiques essentielles du sol (taux de condensation, proportion des différentes espèces hydrolysées et/ou précondensées, viscosité) n'évoluent pas ou très peu au cours du temps.

En outre, dans le domaine optique, on recherche également l'obtention de sols organosiliciés capables de solubiliser des additifs organiques hydrophobes, peu polaires, en particulier pour l'obtention de films ayant une épaisseur de l'ordre de quelques micromètres.

Cette dernière propriété du sol doit persister lors de l'étape de séchage, c'est-à-dire lors de l'élimination des solvants de solubilisation et la condensation finale des espèces issues de l'hydrolyse, de façon à ce que l'additif ne précipite pas pendant cette étape.

Parmi les additifs organiques particulièrement intéressants dans le domaine optique, on peut citer les composés photochromiques.

Le document FR-A-2 704 851 décrit un procédé de préparation d'un sol organosilicié dans lequel on réalise une hydrolyse complète d'une solution contenant un ou plusieurs organoalcoxysilanes dans un solvant ou mélanges de solvants organiques par une solution aqueuse acide de pH inférieur ou égal à 3, l'élimination du ou des solvants organiques et des alcools résiduels et la concentration de la solution par distillation pour obtenir un sol.

Toutefois, le procédé du brevet FR-A-2 704 851 conduit à des sols dont certaines propriétés évoluent fortement au cours du temps, en particulier le taux de condensation et la composition des espèces présentes dans le sol.

En outre, il est difficile de solubiliser dans les sols du brevet FR-A-2 704 851 des additifs organiques hydrophobes, peu polaires et en particulier des composés photochromiques.

L'article intitulé "Organosiloxane Resin with High Silanol Content" Furuya et al. - Silicones in Coatings II - A Technology Forum Exploring the Versatility of Silicone- 24-26 Mars 1998 - Floride - USA - Conference Papers", décrit la synthèse d'une résine d'organosiloxane par hydrolyse de trialcoxysilanes avec de l'eau acidifiée en l'absence d'un solvant organique. L'alcool engendré lors de l'hydrolyse est éliminé par chauffage ou sous pression réduite pour faire précipiter un produit visqueux qui est une résine de siloxane à teneur élevée en silanol.

Bien que le procédé de l'article conduise à des sols plus stables, il serait néanmoins souhaitable d'obtenir des sols ayant encore une stabilité accrue et en outre une meilleure aptitude à la solubilisation des additifs tels que des composés photochromiques.

On a maintenant trouvé selon l'invention qu'en hydrolysant un précurseur organosilicié avec un grand excès d'eau, puis en concentrant l'hydrolysat et en le laissant reposer jusqu'à l'obtention d'une demixtion en une phase aqueuse et une phase organosiliciée, et en redispersant la phase organosiliciée récupérée très pauvre en eau, et éventuellement séchée, dans un solvant hydrophobe, on obtenait un sol très stable et dans lequel il était possible de solubiliser des additifs tels que des composés photochromiques.

Selon l'invention, le procédé de préparation d'un sol organosilicié comprend :

a) l'hydrolyse d'un volume initial $V_{si}$ d'un matériau précurseur comprenant au moins un monomère précurseur organosilicié de formule :

$$R^1_n \, Si \, (OR^2)_{4-n} \qquad (I)$$

dans laquelle :

- les radicaux $R^1$, identiques ou différents, représentent un groupe alkyle, un groupe aryle, un groupe vinyle ou H,
- les radicaux $R^2$, identiques ou différents, représentent H ou un groupe alkyle, et
- n est un entier variant de 1 à 2,

- n = 2 si $R^1$ représente H,

avec une quantité d'eau telle que

$$\frac{x\ H_2O}{x\ Si} \geq 10$$

et, avec une quantité éventuelle d'un solvant organique telle que

$$0 \leq \frac{x\ Solvant}{x\ Si} \leq 8$$

où x $H_2O$, x Si et x Solvant représentent, respectivement, le nombre de moles de $H_2O$, Si et Solvant présents, et à la condition que lorsque

$$\frac{x\ H_2O}{x\ Si} = 10,\ x\ Solvant = 0,$$

pour obtenir un hydrolysat du matériau précurseur;
b) la concentration de l'hydrolysat jusqu'à un volume sensiblement égal au volume initial $V_{si}$;
c) la mise au repos de l'hydrolysat concentré jusqu'à obtention d'une phase aqueuse et d'une phase organosiliciée distinctes; et
d) la séparation et la récupération de la phase organosiliciée.

La phase organosiliciée récupérée est de préférence soumise à une étape (e) de séchage, soit (1) par addition d'un solvant ayant un point d'ébullition supérieur à 100°C à la pression atmosphérique ou un solvant formant un azéotrope avec l'eau (par exemple la 2-butanone Teb = 79,6°C) et évaporation du solvant, soit (2) par extraction avec un solvant hydrophobe.

L'emploi d'un solvant à point d'ébullition supérieur à 100°C qui nécessite un chauffage à une température relativement importante pour éliminer le solvant, a pour inconvénient de faire évoluer le sol (taux de condensation).

La distillation azéotropique bien qu'utilisant des températures plus basses, nécessite des distillations répétées et la quantité d'eau restante dans le sol demeure relativement importante.

Il est donc préférable de sécher par extraction avec un solvant hydrophobe présentant un point d'ébullition inférieur ou égal à 80°C. A titre préférentiel, on utilise l'acétate d'éthyle ou l'éther diéthylique.

La méthode de séchage recommandée est l'extraction à l'éther diéthylique qui, toutefois, nécessite un remplacement de l'éther par un autre solvant.

En effet, le diéthyléther n'est pas un solvant convenable pour l'utilisation du sol. Le sol est polaire et sa solubilité dans le diéthyléther ne permet pas d'atteindre le volume $V_{si}$ par évaporation.

De plus, ce solvant volatil ne permet pas la mise en forme des matériaux.

Le diéthyléther est aisément remplacé par tout solvant de température d'ébullition plus élevée et dans lequel les espèces organo siliciées sont solubles.

Le diéthyléther est donc partiellement évaporé sous pression réduite (jusqu'à la limite de solubilité du sol), le solvant de remplacement est ajouté en excès (par exemple 2 $V_{si}$ ), puis l'évaporation se poursuit jusqu'à l'obtention du volume $V_{si}$.

Cette dernière opération est effectuée deux fois afin d'évaporer tout le diéthyléther présent dans le sol.

Les solvants utilisés sont, par exemple, l'acétone, la 2-butanone, le tétrahydrofuranne.

Lorsqu'on utilise l'étape d'extraction à l'éther diéthylique, à la fois la phase organique siliciée et la phase aqueuse obtenue peuvent être extraites à l'éther et les deux phases éthérées sont réunies avant remplacement de l'éther par un autre solvant.

L'eau d'hydrolyse est une solution aqueuse ayant généralement un pH compris entre 3 et 10, et de préférence acide. La solution d'hydrolyse peut être acidifiée par un acide inorganique tel que HCl, $HNO_3$ ou $H_2SO_4$ ou un acide organique tel que l'acide acétique.

Comme indiqué ci-dessus, la quantité de solution aqueuse utilisée pour l'hydrolyse est telle que le rapport

$$\frac{x\,H_2O}{x\,Si} \geq 10,$$

de préférence

$$10 \leq \frac{x\,H_2O}{x\,Si} \leq 20.$$

Le milieu d'hydrolyse peut éventuellement comprendre un solvant organique choisi de préférence parmi le THF (tétrahydrofurane), les alcools inférieurs tels que l'éthanol ou les cétones inférieures telles que l'acétone.

Le matériau précurseur hydrolysable comprend au moins un monomère précurseur organosilicié de formule :

$$R_n^1\,Si\,(OR^2)_{4-n} \qquad (I)$$

où $R^1$, $R^2$ et n sont tels que définis précédemment.

$R^1$ représente de préférence un radical méthyle, éthyle, phényle ou phényle substitué par des groupements de préférence non polaires (par exemple des groupes alkyles tels que méthyle, éthyle, propyle, ou des groupes phényles, ou encore un radical vinyle.

$R^2$ représente de préférence H ou un groupe alkyle en $C_1$ à $C_7$, par exemple un radical méthyle, éthyle ou propyle.

De préférence, n est égal à 2 ou 1, et mieux n est égal à 1.

Parmi les précurseurs organosiliciés de formule (I) particulièrement préférés, on peut cier le méthyl triméthoxysilane (MTMOS), le méthyl triéthoxysilane (MTEOS), l'éthyl triéthoxysilane (ETEOS), le diméthyldiméthoxysilane (DMDMOS), le diméthyldiéthoxy silane (DMDEOS), le diéthoxyméthylsilane (HMDEOS), le phényl triéthoxysilane (PTEOS) et le vinyl triéthoxysilane (VTEOS).

Outre un monomère précurseur ou un mélange de monomères précurseurs de formule (I), le matériau précurseur peut comprendre au moins un monomère précurseur choisi parmi les monomères époxy trialcoxysilanes. Parmi ces monomères époxytrialcoxysilanes, on peut citer les silanes à groupement époxy de formule :

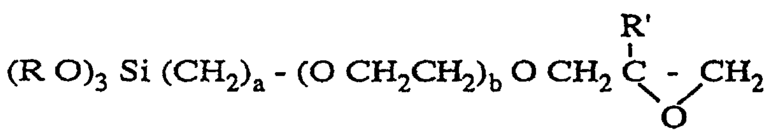
(II)

dans laquelle :

R est un groupement alkyle en $C_1$-$C_6$, préférentiellement $CH_3$ ou $C_2H_5$,
R' est un groupement méthyle ou un atome d'hydrogène,
a est un entier de 1 à 6, et
b est 0, 1 ou 2.

Les monomères époxysilanes préférés sont le γ-glycidoxy propyltriméthoxysilane ou le γ-glycidoxypropyltriéthoxysilane.

Le monomère particulièrement préféré est le γ-glycidoxy propyltriméthoxysilane (GLYMO).

Généralement, le temps de mise au repos pour l'obtention de la séparation de phases (démixtion) peut varier de 1 à plusieurs jours jusqu'à plusieurs semaines, par exemple 4 à 6 semaines.

Pour obtenir une séparation de phases (demixtion) à l'étape (c) de repos, lorsque le matériau précurseur comprend un monomère précurseur répondant à la formule (I) et un monomère précurseur époxytrialcoxysilane, la proportion, en pourcent molaire, de monomères précurseurs époxytrialcoxysilanes par rapport aux monomères précurseurs de formule (I), est généralement de l'ordre de 50% ou moins selon les monomères utilisés. De préférence, la proportion molaire de monomères précurseurs époxytrialcoxysilanes par rapport aux monomères de formule (I) sera de 25% environ ou moins.

L'étape (b) d'élimination de l'eau et des solvants organiques peut se faire par tout moyen approprié mais de préférence par application d'un vide primaire.

On peut, selon l'application envisagée pour les sols organosiliciés selon l'invention, y introduire des additifs modifiant les propriétés mécaniques (élasticité, rigidité, dureté) ou optiques (indice, couleur) du produit final, par exemple par addition d'un additif en solution organique compatible avec le milieu organique du sol, puis concentration du sol.
Les additifs utilisés peuvent être des colorants tels que des colorants laser, des enzymes, des nanoparticules de semi-conducteurs ou magnétiques, ou encore des composés photochromiques.
La structure des sols selon l'invention, présentant un taux élevé de motifs $T^2$, s'avère particulièrement adaptée pour favoriser les performances spectrocinétiques des composés photochromiques organiques.
Les composés photochromiques préférentiellement utilisés sont des spirooxazines, des chromènes ou des fulgides.
On peut également incorporer à la phase organosiliciée ou sol selon l'invention, une quantité prédéterminée de silice colloïdale, préférentiellement de silice colloïdale en solvant organique dont le pH est compris entre 3,5 et 6, telle que la silice colloïdale mixte $SiO_2/Al_2O_3$ (pH 5) en quantités représentant jusqu'à 60% en poids du sol.
La silice colloïdale est généralement introduite dans la phase finale de préparation du sol, après récupération de la phase organosiliciée.
Les sols organosiliciés selon l'invention se caractérisent, entre autres, par un taux de condensation (Tc) stable, supérieur ou égal à 0,65 et la présence d'une teneur en motifs siliciés $T^2$ supérieure ou égale à 50% molaire, et de préférence supérieure ou égale à 60% molaire.
De préférence, les sols organosiliciés selon l'invention sont exempts d'eau, tel que déterminé par l'absence de pics correspondant à l'eau par RMN $^1H$.
L'invention concerne également des sols organosiliciés ayant les caractéristiques précédentes et incluant au moins un composé photochromique solubilisé.
On a déterminé que la solubilité des additifs, en particulier des composés photochromiques, était très nettement accrue avec les sols organosiliciés selon l'invention.
En outre, les sols organosiliciés selon l'invention sont très stables.
Les sols organosiliciés selon l'invention peuvent être mis en forme et condensés en matériaux massifs tels que des xérogels ou en films minces.
Les sols selon l'invention conviennent tout particulièrement pour la réalisation de films durs anti-abrasion ou anti-reflets dans le domaine de l'optique ophtalmique, et spécialement pour les verres de lunettes.
Les exemples suivants illustrent la présente invention.
Dans les exemples, sauf indications contraires, tous les pourcentages et parties sont exprimés en poids.

**Exemple de préparation d'un sol organosilicié selon l'invention.**

On va maintenant décrire un exemple de préparation d'un sol organosilicié en se référant aux figures la à 1b qui représentent schématiquement les différentes étapes du procédé de l'invention.

<u>Hydrolyse des précurseurs</u>

A un équivalent molaire de méthyltriéthoxysilane (MTEOS) qui, comme le montre la figure la, représente un volume initial $V_{si}$, on ajoute 20 équivalents molaires d'eau dont le pH a été abaissé à 3,8 par addition de HCl.
Le mélange est laissé sous agitation pendant 15 heures.
Initialement, le mélange n'est pas miscible. Lorsque l'avancement de l'hydrolyse est suffisant (2 heures), l'éthanol formé permet la miscibilité. La solution est alors limpide.

<u>Concentration du sol</u>

Après l'hydrolyse, on évapore les solvants sous pression réduite (de préférence un vide primaire) jusqu'à l'obtention du volume initial $V_{si}$.

<u>Démixtion</u>

Le sol ainsi obtenu est entreposé à 4°C.
Après 24 heures, le sol MTEOS est trouble, et la démixtion commence.
Après 5 jours à 4°C, la démixtion maximale est obtenue et comme le montre la figure 1b, on obtient une phase organo-siliciée très visqueuse et une phase aqueuse surnageante.
La composition des deux phases a été obtenue par RMN $^1H$.
Les proportions relatives de chaque espèce sont récapitulées dans le tableau ci-dessous. (Proportions molaires).

| Espèces | Phase siliciée | Phase aqueuse |
|---|---|---|
| $CH_3$-Si | 46% | 0,6% |
| $CH_3CH_2OH$ | 4% | 1,4% |
| $H_2O$ | 50% | 98% |

Taux de condensation (Tc) des espèces siliciées dans la phase siliciée 0,78
Taux de condensation (Tc) des espèces siliciées dans la phase aqueuse 0,66

A ce stade, la phase siliciée renferme 50% d'eau.

Cette phase est récupérée puis traitée au diéthyléther.

La fraction d'eau préalablement piégée dans la phase siliciée est nettement visible et peut être séparée sans difficulté.

Le spectre RMN $^1$H de la phase siliciée redispersée dans le diéthyléther ne laisse pas voir de pic correspondant à l'eau.

Remplacement du diéthyléther par un autre solvant

Avant l'utilisation du sol, comme indiqué précédemment, il faut remplacer le diéthyléther par un autre solvant, par exemple l'éthanol.

Ce remplacement peut se faire aisément, comme le montre la figure 1c, par évaporation de l'éther diéthylique, de préférence sous pression réduite, addition d'un solvant approprié et concentration jusqu'à un volume voisin du volume initial $V_{si}$.

Le sol final obtenu présente la répartition des espèces siliciées suivantes (composition molaire) :

$T^1$ = 3,9%    $T^2$ = 54,7%    $T^3$=41,4%

Le taux de condensation Tc des espèces siliciées est de 0,79%.

Test de stabilité

Le sol est conservé pendant 18 mois à une température de 4°C.

On procède alors à une nouvelle analyse de la composition du sol.

La répartition des espèces siliciées (composition molaire) est :

$T^1$ = 2,6%    $T^2$ = 53,4%    $T^3$ = 44%

Le taux de condensation Tc des espèces siliciées est de 0,80%.

On constate la très grande stabilité des sols selon l'invention.

Mise en forme et condensation des matériaux

**Matériaux massifs :**

Le sol est versé dans un moule en polypropylène.
Ce moule est ensuite recouvert d'une feuille d'aluminium percée de deux trous de 0,5 mm de diamètre.
L'échantillon est ensuite placé dans une étuve.
La température de l'étuve est typiquement de 60°C.
A cette température, le sol a gélifié et présente un début de retrait après 16 heures.
Après quatre jours, le xérogel est sorti de l'étuve.
Les échantillons ainsi préparés ont un volume de quelques centimètres cubes. Ils peuvent être polis pour une application optique.

**Films minces :**

Les films sont déposés par centrifugation.
La viscosité du sol est ajustée après l'introduction de l'additif organique (si présent). Le volume du sol est amené à un volume inférieur à $V_{si}$ pour un sol visqueux et des films épais et il peut être dilué pour diminuer la viscosité

et obtenir des films plus minces.
La viscosité du sol (concentration en silicium) et la vitesse de rotation du substrat permettent de faire varier l'épaisseur des films.

**Exemples :**

[Si] = 7 moles/1 - substrat : 1300 tours/minute
épaisseur du film obtenu : 7 µm.
[Si] = 0,2 mole/1 - substrat : 1000 tours/minute épaisseur du film obtenu : 85 nm.

Les sols sont déposés sur différents substrats : verre minéral, verre minéral recouvert d'or, silicium cristallin poli double face.
Les films sont ensuite condensés à différentes températures, de 70 à 130°C.

**Exemple comparatif :**

Un sol est préparé selon le procédé décrit dans le brevet FR 2 704 851. On mélange 0,1 mole de MTEOS (méthyltriéthoxysilane) avec 0,3 mole d'eau (soit 5,4 $cm^3$) dont le pH est ajusté à 2,5 par addition d'acide chlorhydrique, et 0,3 mole d'éthanol (soit 17,5 $cm^3$).
Le mélange est agité pendant quelques heures, puis on effectue une distillation sous vide primaire ($10^{-3}$ mm de Hg ou $10^{-3}$ torr) de ce mélange jusqu'à obtenir pour celui-ci un volume identique au volume du MTEOS initial. On obtient ainsi un sol sirupeux présentant une concentration de 5,02 mole/l en atomes de silicium.
Le pH final de ce sol est compris entre 3 et 4.
Ce sol obtenu par hydrolyse stoechiométrique présente un taux de condensation Tc de l'ordre de 0,58, inférieur à celui des sols de l'invention.

Les espèces siliciées (motifs) présentes dans le milieu sont :
$T^1$ 34,9% $T^2$ 57,4% $T^3$ 7,7%
(compositions molaires)
Le sol est stocké à 4°C pendant une durée de 11 mois.
De nouvelles mesures montrent que le taux de condensation Tc est passé de 0,58 à 0,90.
Les espèces siliciées présentes sont :
$T^1$ 0,6% $T^2$ 29,5% $T^3$ 69,9%
De plus, des particules ont précipité, ce qui nécessite une filtration préalable avant d'utiliser le sol.

<u>Caractérisation mécanique</u>

Les résultats obtenus l'ont été sur des films de 5 à 7 µm d'épaisseur.
Ces mesures consistent à indenter les couches de quelques micromètres d'épaisseur sur quelques centaines de nanomètres de profondeur.
La nanoindentation permet d'obtenir des grandeurs caractéristiques du comportement mécanique des films.
On mesure Er (module d'Young réduit)
H la dureté plastique

| **Solubilisé** | **Film (conditions de durcissement)** | **Er** | **H (MPa)** |
|---|---|---|---|
| Ex. 1 | (1 h 30 - 130°C)<br>(3 jours - 130°C) | 2,35<br>4,08 | 180<br>650 |
| Ex. 1 + $SiO_2$ 55% de l'extrait sec du sol | (OSCAL 1122 A8 Shokubai)<br><br>(1 h 30 - 130°C) | <br><br>6,49 | <br><br>450 |

(suite)

| Solubilisé | Film (conditions de durcissement) | Er | H (MPa) |
|---|---|---|---|
| | (3 jours - 130°C) | 9,46 | 1200 |
| Ex. comparatif | 100°C | 3,1 | 110 - 140 |

Incorporation d'additifs

La solubilité de quelques molécules a été comparée dans deux types de sol de MTEOS.

| | Molécules | Sol exemple comparatif<br>Rapport molaire | Sol exemple comparatif<br>% masse d'extrait sec | Sol exemple 1<br>Rapport molaire | Sol exemple 1<br>% masse d'extrait sec |
|---|---|---|---|---|---|
| | **Composés photochromiques** | | | | |
| Films | SO1 | 10/1000 | (5,8%) | 50/1000 | (29%) |
| Films | SO6 | 1,8/1000<br>précipitation dans le sol | (1,3%) | 6/1000<br>précipitation lors du séchage | (4,2%) |
| Films | SO4 | | | 2/1000 | (1,2%) |
| Films | DTE 1 | 2/1000<br>précipitation dans le sol | (1,7%) | 10/1000 | (8,7%) |
| | **Autres molécules** | | | | |
| Xerogel | Phtalocyanine de ruthénium | $3,5.10^{-4}$<br>précipitation | (0,40%) | $3,5 \times 10^{-4}$ | (0,40%) |
| Xerogel | Naphtalocyanine d'étain | $1,3 \times 10^{-4}$ | (0,32%) | $10^{-3}$ | (2,1%) |
| Xerogel | Complexe de fer à transition de spin | insoluble | | $2 \times 10^{-4}$ | (0,21%) |

Quelle que soient les molécules, le sol selon l'invention permet une bien meilleure solubilité.

Les sols de l'invention permettent d'introduire des molécules jusqu'ici jamais incorporées dans ce type de sol.

Additifs utilisés (Signification des abréviations)

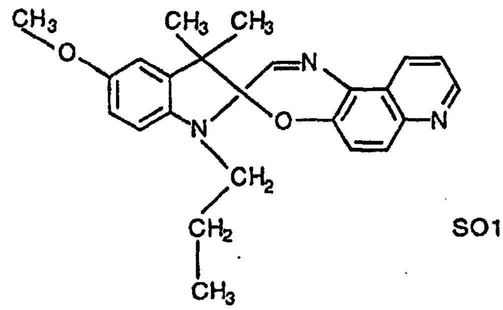

SO1

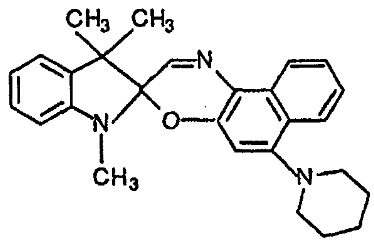

SO4

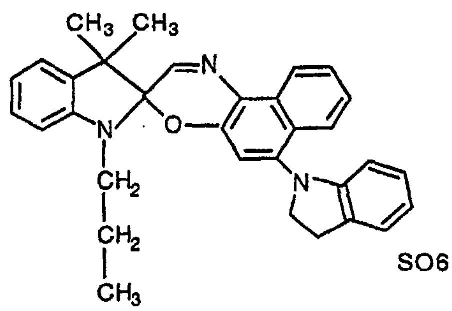

SO6

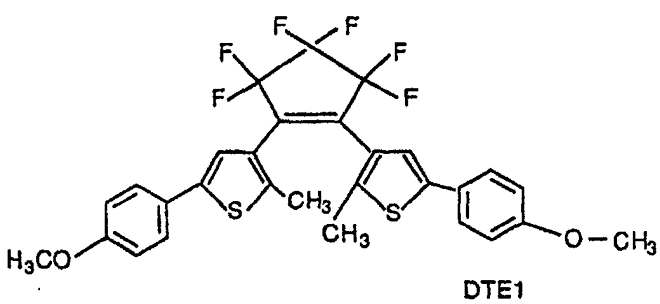

DTE1

Détermination du taux de condensation

L'état de condensation des phases est obtenu par RMN $^{29}$Si. Cette technique permet de différencier tous les atomes de silicium d'environnement différent.

Dans le cas d'un sol totalement hydrolysé, les espèces présentes dans le milieu sont :

| | Dénomination |
|---|---|
| $R^1Si\ (OH)_3$ | $T^0$ |
| $R^1Si\ (OH)_2$ - OSi | $T^1$ |
| $R^1Si\ (OH)\ (OSi)_2$ | $T^2$ |
| $R^1Si\ (OSi)_3$ | $T^3$ |

Le taux de condensation Tc est le rapport du nombre de siloxanes formés sur le nombre de siloxanes maximal.

$$Tc=(1kT^1+2kT^2+3kT^3)/3.$$

ou $kT^1$, $kT^2$ et $kT^3$ sont respectivement les fractions molaires en espèces $T^1$, $T^2$ et $T^3$.

<u>Exemples de sols contenant un monomère époxytrialcoxysilane</u>

En procédant comme précédemment, on a préparé les sols suivants :

| Monomères précurseurs % molaire | | | | | Conditions de démixtion |
|---|---|---|---|---|---|
| | ETEOS | DMDMOS | MTMOS | GLYMO | |
| Sol 1 | 100 | - | - | - | 4 semaines à 25°C et 1 semaine à 4°C |
| Sol 2 | - | 25 | - | 75 | pas de démixtion |
| Sol 3 | - | 42 | - | 58 | 3 1/2 jours à 25°C et 1/2 journée à 5°C |
| Sol 4 | - | 50 | - | 50 | " " |
| Sol 5 | - | 75 | - | 25 | " " |
| Sol 6 | - | - | 25 | 75 | pas de démixtion |
| Sol 7 | - | - | 50 | 50 | pas de démixtion |
| Sol 8 | - | - | 75 | 25 | 1 semaine à 4°C |

## Revendications

**1.** Procédé de préparation d'un sol organosilicié, **caractérisé en ce qu'**il comprend :

a) l'hydrolyse d'un volume initial $V_{si}$ d'un matériau précurseur comprenant au moins un monomère précurseur de formule :

$$R^1_n\ Si\ (OR^2)_{4-n} \qquad (I)$$

dans laquelle :

- les radicaux $R^1$, identiques ou différents, représentent un groupe alkyle, un groupe aryle ou un groupe vinyle ou H,
- les radicaux $R^2$, identiques ou différents, représentent H ou un groupe alkyle, et
- n est un entier variant de 1 à 2, et n = 2 si $R^1$ représente H, avec une quantité d'eau telle que

$$\frac{xH_2O}{x\ Si} \geq 10$$

et, avec une quantité éventuelle d'un solvant organique telle que

$$0 \leq \frac{x\ Solvant}{x\ Si} \leq 8$$

où x $H_2O$, x Si et x Solvant représentent, respectivement, le nombre de moles de $H_2O$, Si et Solvant présents, et à la condition que lorsque

$$\frac{x\ H_2O}{x\ Si} = 10,\ x\ Solvant = 0,$$

pour obtenir un hydrolysat du matériau précurseur;
b) la concentration de l'hydrolysat jusqu'à un volume sensiblement égal au volume initial $V_{si}$;
c) la mise au repos de l'hydrolysat concentré jusqu'à obtention d'une phase aqueuse et d'une phase organosiliciée distinctes; et
d) la séparation et la récupération de la phase organosiliciée.

**2.** Procédé selon la revendication 1, **caractérisé en ce que** :

$R^1$ représente un radical méthyle, éthyle, phényle, phényle substitué, de préférence substitué par des groupements non polaires, ou un radical vinyle;
- $R^2$ représente un radical alkyle en $C_1$-$C_7$; et
- n représente 1 ou 2, de préférence 1 lorsque $R^1$ ne représente pas H.

**3.** Procédé selon la revendication 1 ou 2, **caractérisé en ce que** la quantité d'eau d'hydrolyse est telle que

$$10 \leq \frac{x\ H_2O}{x\ Si} \leq 20.$$

**4.** Procédé selon l'une quelconque des revendications 1 à 3, **caractérisé en ce que** le matériau précurseur comprend en outre au moins un autre monomère précurseur choisi parmi les époxytrialcoxysilanes.

**5.** Procédé selon la revendication 4, **caractérisé en ce que** les époxytrialcoxysilanes répondent à la formule :

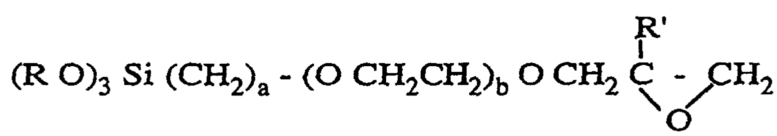

(II)

dans laquelle :

- R est un groupe alkyle en $C_1$-$C_6$,
- R' représente H ou $CH_3$,
- a est un entier de 1 à 6, et b est 0, 1 ou 2.

**6.** Procédé selon la revendication 5, **caractérisé en ce que** l'époxytrialcoxysilane est le γ-glycidoxypropyltriméthoxysilane.

**7.** Procédé selon l'une quelconque des revendications 4 à 6, **caractérisé en ce que** le ou les époxytrialcoxysilanes représentent 50% molaire ou moins des monomères précurseurs.

**8.** Procédé selon l'une quelconque des revendications 5 à 7, **caractérisé en ce que** le monomère précurseur de formule (I) est choisi parmi le méthyltriéthoxysilane, l'éthyltriéthoxysilane et leurs mélanges.

**9.** Procédé selon l'une quelconque des revendications précédentes, **caractérisé en ce que** l'hydrolysat a un pH compris entre 3 et 10.

**10.** Procédé selon l'une quelconque des revendications précédentes, **caractérisé en ce qu'**on incorpore une quantité prédéterminée de silice colloïdale mixte $SiO_2$ dans la phase organosiliciée récupérée.

**11.** Procédé selon l'une quelconque des revendications précédentes, **caractérisé en ce qu'**il comprend en outre:

(e) une étape de séchage de la phase organosiliciée récupérée.

**12.** Procédé selon la revendication 11, **caractérisé en ce que** l'étape de séchage comprend l'addition d'un solvant ayant un point d'ébullition supérieur à 100°C à la pression atmosphérïque ou un solvant formant un azéotrope avec l'eau et l'évaporation du solvant.

**13.** Procédé selon la revendication 11, **caractérisé en ce que** l'étape de séchage comprend une extraction avec un solvant hydrophobe.

**14.** Procédé selon la revendication 13, **caractérisé en ce que** le solvant hydrophobe est l'éther diéthylique.

**15.** Procédé selon la revendication 14, **caractérisé en ce que** l'éther diéthylique est remplacé par un solvant approprié avant utilisation du sol organosilicié.

**16.** Sol organo-silicié stable constitué d'espèces siliciées $T^1$, $T^2$ et $T^3$, **caractérisé en ce que** la fraction molaire d'espèce $T^2$ est supérieure ou égale à 50%, de préférence 60%, et le taux de condensation Tc est supérieur ou égal à 0,65.

**17.** Sol organosilicié selon la revendication 16, **caractérisé en ce qu'**il est exempt d'eau tel que déterminé par l'absence de pics correspondant à l'eau en RMN $^1H$.

**18.** Sol organosilicié selon la revendication 16 ou 17, **caractérisé en ce qu'**il contient au moins un agent photochromique solubilisé.

**19.** Sol organosilicié selon l'une quelconque des revendications 16 à 18, **caractérisé en ce qu'**il a été obtenu par le procédé selon l'une quelconque des revendications 1 à 15.

**20.** Film ou xérogel obtenu à partir d'un sol polyorganosilicié selon l'une quelconque des revendications 16 à 19.

**Claims**

**1.** A method for preparing an organo-silicon sol, **characterised in that** it comprises :

a) hydrolysis of an initial volume $V_{si}$ of a precursor material containing at least an organo-silicon monomer precursor with formula :

$$R^1_n\,Si\,(OR^2)_{4-n} \qquad (I)$$

in which

- the radicals $R^1$, identical or different, represent an alkyl group, an aryl group, a vinyl group or H,
- the radicals $R^2$, identical or different, represent H or an alkyl group, and
- n is an integer varying from 1 to 2, and n = 2 if $R^1$ represents H,

with a water quantity such as

$$\frac{x\,H_2O}{x\,Si} \geq 10$$

and, with an optionally quantity of an organic solvent such that

$$0 \leq \frac{x\,Solvent}{x\,Si} \leq 8$$

where x $H_2O$, x Si and x Solvent represent, respectively, the number of moles of $H_2O$, Si and Solvent present. and under the condition that when

$$\frac{x\ H_2O}{x\ Si} = 10,\ x\ Solvent = 0,$$

to obtain a hydrolysate of the precursor material;
b) concentration of the hydrolysate down to a volume substantially equal to the initial volume $V_{si}$;
c) leaving the concentrated hydrolysate until a distinct aqueous phase and a distinct organo-silicon phase are obtained, and
d) separation and collection of the organo-silicon phase.

**2.** A method according to claim 1, **characterised in that**,

- $R^1$ represents a methyl, ethyl, phenyl, substituted phenyl radical, preferably substituted with non-polar groups, or a vinyl radical;
- $R^2$ represents a $C_1$ to $C_7$ alkyl radical ; and
- n is 1 or 2, preferably I when $R^1$ does not represent H.

**3.** A method according to claim 1 or 2, **characterised in that** the quantity of hydrolysis water is such that

$$10 \leq \frac{x\ H_2O}{x\ Si} \leq 20$$

**4.** A method according to any one of claims 1 to 3, **characterised in that** the precursor material comprises moreover at least another monomer precursor selected among the epoxytrialkoxysilanes.

**5.** A method according to claim 4, **characterised in that** the epoxytrialkoxysilanes have the formula:

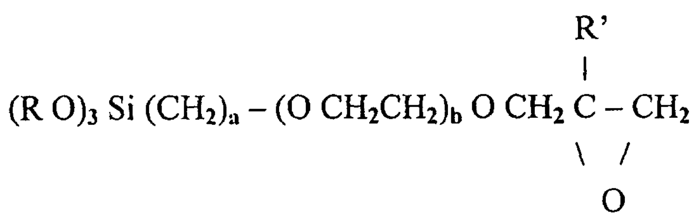

(II)

in which :

- R is a $C_1$-$C_6$ alkyl group,
- R' represents H or $CH_3$,
- a is an integer from 1 to 6, and b is equal to 0, 1 or 2.

**6.** A method according to claim 5, **characterised in that** the epoxytrialkoxysilane is γ-glycidoxypropyltrimethoxysilane.

**7.** A method according to any one of claims 4 to 6, **characterised in that** the epoxytrialcoxysilane(s) represents 50 % or less of the monomer precursors.

**8.** A method according to any one of claims 5 to 7, **characterised in that** the monomer precursor of formula (I) is selected among methyltriethoxysilane, ethyltriethoxysilane and their mixtures.

**9.** A method according to any one of the previous claims, **characterised in that** the hydrolysate has a pH ranging from 3 to 10.

**10.** A method according to any one of the previous claims, **characterised in that** a predetermined quantity of mixed

colloidal silica $SiO_2$ is incorporated to the organo-silicon phase recovered.

**11.** A method according to any one of the previous claims, **characterised in that** it comprises moreover:

(e) a drying step of the recovered organo-silicon phase.

**12.** A method according to claim 11, **characterised in that** the drying step comprises the addition of a solvent with a boiling point above 100°C at atmospheric pressure or a solvent forming an azeotrope with water and evaporation of the solvent.

**13.** A method according to claim 11, **characterised in that** the drying step comprises an extraction with a hydrophobic solvent.

**14.** A method according to claim 13, **characterised in that** the hydrophobic solvent is diethyl ether.

**15.** A method according to claim 14, **characterised in that** the diethyl ether is replaced with an appropriate solvent before using the organo-silicon sol.

**16.** A stable organo-silicon sol made of silicon species $T^1$, $T^2$ and $T^3$, **characterised in that** the molar fraction of specie $T^2$ is equal to or greater than 50 %, preferably 60 %, and the condensation rate Tc is equal to or greater than 0.65.

**17.** An organo-silicon sol according to claim 16, **characterised in that** it is free of water, as determined by the absence of peaks corresponding to water by RMN$^1$H.

**18.** An organo-silicon sol according to claim 16 or 17, **characterised in that** it contains at least one solubilised photochromic compound.

**19.** An organo-silicon sol according to any one of claims 16 to 18, **characterised in that** it has been obtained by the method according to any one of claims 1 to 15.

**20.** A film or xerogel obtained from a polyorgano-silicon sol according to any one of claims 16 to 19.

**Patentansprüche**

**1.** Verfahren zur Herstellung eines organosilizierten Sols, **dadurch gekennzeichnet, dass** es umfasst:

a) die Hydrolyse eines anfänglichen Volumens $V_{si}$ eines Vorläufermaterials, umfassend zumindest ein Vorläufermonomer der Formel:

$$R^1{}_nSi(OR^2)_{4-n} \qquad (I)$$

wobei:

- die Radikale $R^1$, identisch oder unterschiedlich, eine Alkylgruppe, eine Arylgruppe oder eine Vinylgruppe oder H darstellen,
- die Radikale $R^2$, identisch oder unterschiedlich, H oder eine Alkylgruppe darstellen, und
- n eine Ganzzahl ist, variabel zwischen 1 und 2, wobei n=2, wenn $R^1$ H darstellt, mit einer Wassermenge, wie in

$$\frac{xH_2O}{xSi} \geq 10$$

und mit einer eventuellen Menge eines organischen Lösungsmittels, derart dass

$$0 \leq \frac{xLösungsmittel}{xSi} \leq 8$$

wobei $xH_2O$, xSi und xLösungsmittel jeweils, die Molanzahl an vorhandenem $H_2O$, Si und Lösungsmittel darstellen,

und unter der Bedingung, dass, wenn

$$\frac{xH_2O}{xSi} = 10, \text{xLösungsmittel} = 0$$

zum Erhalten eines Hydrolysates des Vorläufermaterials;

b) die Konzentration des Hydrolysates bis hin zu einem Volumen im wesentlichen gleich zu dem anfänglichen Volumen $V_{si}$;

c) Ruhen lassen des konzentrierten Hydrolysats bis hin zur Erhaltung einer distinkten wässrigen Phase und einer distinkten organosilizierten Phase; und

d) Trennung und Gewinnung der organosilizierten Phase.

2. Verfahren nach Anspruch 1, **dadurch gekennzeichnet, dass**

- $R^1$ ein Methyl-, Ethyl-, Phenyl-, substituiertes Phenyl-Radikal darstellt, wobei die Substitution bevorzugt gebildet ist durch nicht-polare Gruppierungen, oder ein Vinyl-Radikal;
- $R^2$ ein Alkylradikal in $C_1$-$C_7$ darstellt; und
- n 1 oder 2 darstellt, bevorzugt 1 wenn $R^1$ nicht H darstellt.

3. Verfahren nach Anspruch 1 oder 2, **dadurch gekennzeichnet, dass** die Wassermenge der Hydrolyse derart ist, dass

$$10 \leq \frac{xH_2O}{xSi} \leq 20$$

4. Verfahren nach einem der Ansprüche 1 bis 3, **dadurch gekennzeichnet, dass** das Vorläufermaterial ferner zumindest ein weiteres Vorläufermonomer umfasst, ausgewählt unter den Epoxytrialkoxysilanen.

5. Verfahren nach Anspruch 4, **dadurch gekennzeichnet, dass** die Epoxytrialkoxysilane der folgenden Gleichung genügen:

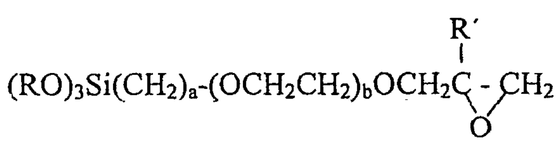

(II)

wobei:

- R eine Alkylgruppe in $C_1$-$C_6$ ist,
- R' H oder $CH_3$ darstellt,
- a eine Ganzzahl ist, zwischen 1 und 6 und b 0, 1 oder 2 ist.

6. Verfahren nach Anspruch 5, **dadurch gekennzeichnet, dass** das Epoxytrialkoxysilan γ-Glycidoxypropyltrimethoxysilan ist.

7. Verfahren nach einem der Ansprüche 4 bis 6, **dadurch gekennzeichnet, dass** die Epoxytrialkoxysilane 50 Mol% oder weniger der Vorläufermonomere darstellen.

8. Verfahren nach einem der Ansprüche 5 bis 7, **dadurch gekennzeichnet, dass** das Vorläufermonomer gemäß Gleichung (I) gewählt ist unter Methyltriethoxysilan, E-thyltriethoxysilan und deren Mischungen.

**9.** Verfahren nach einem der vorangegangenen Ansprüche, **dadurch gekennzeichnet, dass** das Hydrolysat einen pH-Wert aufweist, enthalten zwischen 3 und 10.

**10.** Verfahren nach einem der vorangegangenen Ansprüche, **dadurch gekennzeichnet, dass** man eine vorbestimmte Menge an kolloidalem Siliziumgemisch $SiO_2$ in die gewonnene organosilizierte Phase einbringt.

**11.** Verfahren nach einem der vorangegangenen Ansprüche, **dadurch gekennzeichnet, dass** es ferner umfasst:

(e) einen Trocknungsschritt der gewonnenen organosilizierten Phase.

**12.** Verfahren nach Anspruch 11, **dadurch gekennzeichnet, dass** der Trocknungsschritt das zugeben eines Lösungsmittels umfasst, mit einem Siedepunkt oberhalb von 100°C bei Atmosphärendruck oder ein Lösungsmittel, welches ein Azeotrop mit Wasser bildet, sowie das Verdampfen des Lösungsmittels.

**13.** Verfahren nach Anspruch 11, **dadurch gekennzeichnet, dass** der Trocknungsschritt eine Extraktion mit einem hydrophoben Lösungsmittel umfasst.

**14.** Verfahren nach Anspruch 13, **dadurch gekennzeichnet, dass** das hydrophobe Lösungsmittel Diethylether ist.

**15.** Verfahren nach Anspruch 14, **dadurch gekennzeichnet, dass** der Diethylether vor der Verwendung des organosilizierten Sols durch ein geeignetes Lösungsmittel ersetzt wird.

**16.** Stabiles organosiliziertes Sol, gebildet aus silizierten Arten $T^1$, $T^2$ und $T^3$, **dadurch gekennzeichnet, dass** der molare Anteil der Art $T^2$ größer oder gleich 50%, bevorzugt 60% ist, wobei der Kondensationsgrad $T_c$ größer oder gleich 0,65 ist.

**17.** Organosiliziertes Sol nach Anspruch 16, **dadurch gekennzeichnet, dass** es frei von Wasser ist, soweit durch das Fehlen von Wasser entsprechenden Peaks in 1H-NMR Spektrum bestimmt.

**18.** Organosiliziertes Sol nach Anspruch 16 oder 17, **dadurch gekennzeichnet, dass** es zumindest ein gelöstes photochromatisches Mittel umfasst.

**19.** Organosiliziertes Sol nach einem der Ansprüche 16 bis 18, **dadurch gekennzeichnet, dass** es, nach dem Verfahren gemäß einem der Ansprüche 1 bis 15 erhalten worden ist.

**20.** Film oder Xerogel, das von einem polyorganosilizierten Sol nach einem der Ansprüche 16 bis 19 ausgehend erhalten worden ist.

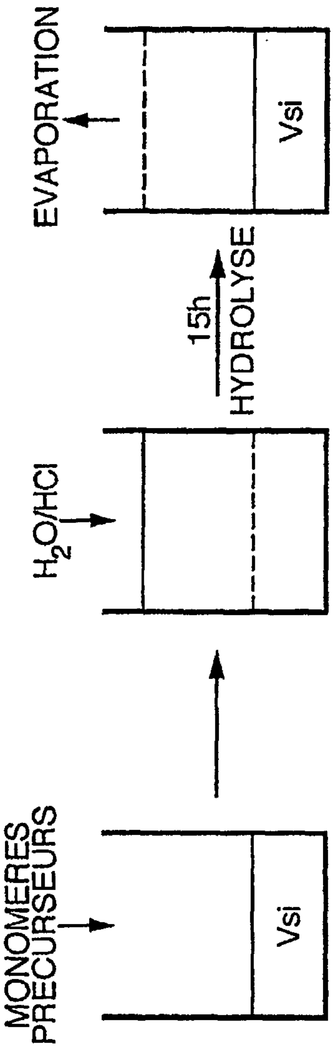


FIG.1a

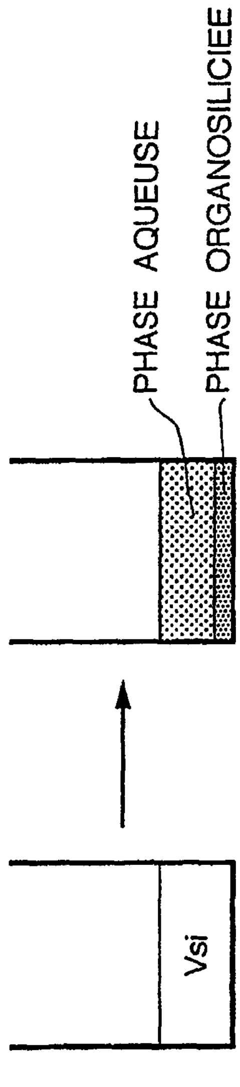


FIG.1b

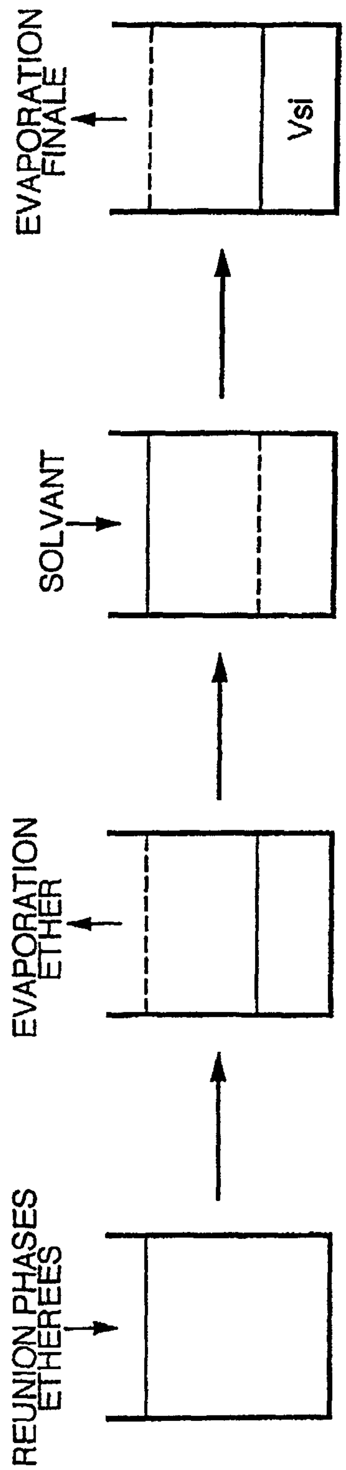


FIG.1c